# EUROPEAN PATENT APPLICATION

(11) **EP 4 607 414 A1**
(43) Date of publication of application: **27.08.2025**
(21) Application number: 25158240.9
(22) Date of filing: 17.02.2025
(51) Int. Cl.: G06N 10/20, G06N 10/40, G06N 10/80

(54) **ARRANGEMENT AND METHOD FOR QUANTUM COMPUTING**

(30) Priority: 21.02.2024 FI 20245207
(71) Applicant: IQM Finland Oy, 02150 Espoo (FI)
(72) Inventor: Taketani, Bruno, 02150 Espoo (FI)
(74) Representative: Berggren Oy

(57) **Abstract**

The disclosure is based on the idea of adding multiple quantum processing units to an arrangement for quantum computing, wherein the quantum processing units are configured to operate in a serial manner. Such arrangement allows continuous quantum circuit execution in the quantum processing units improving thereby circuit execution throughput of the arrangement for quantum computing.

## Description

### FIELD OF THE DISCLOSURE

This disclosure relates to quantum computing, and more particularly to an arrangement and a method for quantum computing and to a quantum computing system.

### BACKGROUND OF THE DISCLOSURE

A quantum computer is a computer that uses the properties of quantum mechanics to perform calculations and store data. There are different types of quantum computers. These include superconducting quantum computers, photonic quantum computers, neutral atom quantum computer, trapped ion quantum computers, and quantum dot quantum computers. The key component in a quantum computer is the quantum processing unit (QPU) which is a chip that comprises several interconnected qubits. Quantum processing units, and the qubits which form the building blocks of QPUs, use the quantum properties of particles like electrons or photons to make certain types of computations much faster than processors in traditional computers.

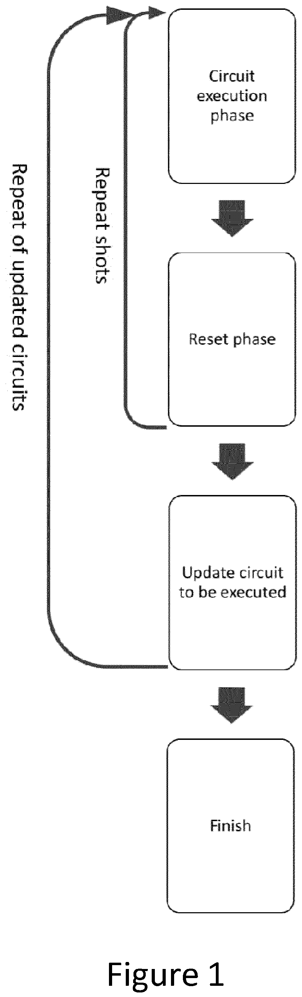

Quantum algorithms are usually described by a quantum circuit (QC) which is a computational routine consisting of coherent quantum operations on qubits. A quantum circuit is an ordered sequence of quantum gates, measurements, and resets. Figure 1 illustrates the process of a quantum algorithm execution in a quantum computer from the perspective of QPU usage. After each quantum circuit execution, the qubits need to be reset. The total time the QPU is used for a single quantum circuit execution is the sum of the circuit execution time and the reset time. Typically, reset is achieved by allowing enough time for the qubits to naturally decay to their ground-state. In the simplest case where all other errors are disregarded, the maximum execution time is a fraction of the decay time of the qubits. Thus, the QPU usage is dominated by the reset operation. This can significantly increase the overall runtime of quantum computation and therefore brings an immediate limitation to the throughput of the quantum computer.

### BRIEF DESCRIPTION OF THE DISCLOSURE

An object of the present disclosure is to provide a solution to the problem described above.

The disclosed solution allows circuit execution throughput improvement of an arrangement for quantum computing with small overhead. Examples provided in this disclosure describe ways to implement the solution.

The object of the disclosure is achieved by features of an arrangement and an operation method which are characterized by what is stated in the independent claims. The preferred embodiments of the disclosure are disclosed in the dependent claims.

The disclosure is based on the idea of adding multiple quantum processing units to an arrangement for quantum computing, wherein the quantum processing units are configured to operate in a serial manner. Such arrangement allows continuous quantum circuit execution in the quantum processing units improving thereby circuit execution throughput. The disclosed solution may be applied to decrease the total time-to-solution of individual jobs, or to increase the throughput of jobs by quantum computers.

### BRIEF DESCRIPTION OF THE DRAWINGS

In the following, the disclosure will be described in greater detail by means of preferred embodiments with reference to the accompanying drawings, in which
Figure 1 illustrates the process of a quantum algorithm execution in a quantum computer;
Figure 2 illustrates a simplified representation of an arrangement for quantum computing comprising a switch;
Figure 3 illustrates another simplified representation of an arrangement for quantum computing comprising a switch. In this example one QPU is a sub-QPU;
Figure 4 presents a flow chart illustration of an example method for increasing circuit execution throughput in an arrangement for quantum computing;
Figure 5 illustrates an example of a quantum circuit execution in an arrangement for quantum computing comprising a switch;

### DETAILED DESCRIPTION OF THE DISCLOSURE

The disclosure describes an arrangement for quantum computing comprising a set of quantum processing units. The set of quantum computing units comprises two or more quantum processing units. Each quantum processing unit in the set of quantum processing units comprises a plurality of qubits arranged to perform a quantum computation. The arrangement further comprises a control unit configured to execute one or more quantum circuits in the set of quantum processing units. The arrangement further comprises a switch. The switch is connected between the set of quantum processing units and the control unit, and the switch is configured to connect a selected quantum processing unit in the set of quantum processing units to the control unit while the other quantum processing units in the set of quantum processing units are not connected to the control unit via the switch. The control unit is configured to, via the switch, cause the selected quantum processing unit in the set of quantum processing units to execute a quantum circuit while the other quantum processing units in the set of quantum processing units are not connected to the control unit via the switch. A quantum computing system may comprise one or more arrangements.

In this disclosure, a "switch" refers to a physical piece of hardware that can direct control signals to a quantum processing unit. In other words, the switch can make and break the connection between the control unit and a quantum processing unit: when the switch makes the connection between the control unit and a selected quantum processing unit, control signals may be transmitted from the control unit to the selected quantum processing unit, whereas when the switch breaks the connection between the control unit and a quantum processing unit, control signals cannot be transmitted to the quantum processing unit.

The switch may be a device that takes as input a set of signals and a specific target. It may have as output multiple channels grouped in sets. Each set is connected to one target from a set of targets. Based on the target that the switch receives as input, the switch routes the set of input signals to the set of output channels corresponding to the input target. The switch may operate in different temperature ranges. It may be placed at room temperature or at cryogenic temperatures. It may operate in different frequency ranges and/or with different signal types. These options may apply to any embodiment in this disclosure.

A "shot" refers to a single execution of a quantum algorithm in a quantum processing unit. A "control unit" refers to a component that generates and transmits control signals which implement some or all operations in the arrangement. These operations may for example include, but are not limited to, executing a quantum circuit in a quantum processing unit and/or managing the switch.

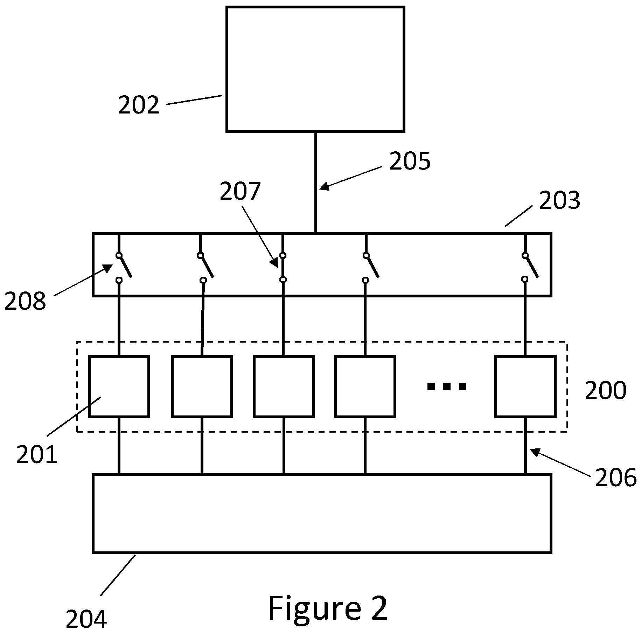

Figure 2 illustrates a simplified representation of an example of arrangement for quantum computing comprising a switch 203. The arrangement further comprises a set of quantum processing units 200 and a control unit 202 configured to execute one or more quantum circuits in the set of quantum processing units 200. The switch 203 is connected between the set of quantum processing units 200 and the control unit 202. In this example, the set of quantum processing units 200 comprises several quantum processing units 201. Each quantum processing unit 201 may comprise one or more qubits arranged to perform a quantum computation according to a plurality of control signals 205 provided to the quantum processing unit, and to provide at least one output signal 206 according to the result of the computation. Each quantum processing unit in the set of quantum processing units may comprise the same number of qubits. Alternatively, at least two quantum processing units in the set of quantum processing units may comprise a different number of qubits. The plurality of qubits may be, but are not limited to, superconducting qubits, neutral atoms qubits, trapped ion qubits, photonic qubits, diamond nitrogen-vacancy (NV) centers qubits, spin qubits, or topological qubits. The superconducting qubits may be, but are not limited to, persistent-current flux qubits, C-shunt flux qubits, charge qubits, transmon qubits, gatemon qubits, Xmon qubits, unimon qubits, fluxoniums, 0 - π -qubits or phase superconducting qubits. The control signals may be microwave signals/pulses. These options may apply to any embodiment in this disclosure. The arrangement may further comprise a read-out unit 204 configured to obtain at least one output signal 206 from each quantum processing unit 201 in the set of quantum processing units 200 and perform at least one statistical operation based on the output signals 206, thus obtaining a quantum computation result.

The switch 203 is configured to connect (207) a selected quantum processing unit 201 in the set of quantum processing units 200 to the control unit 202 while the other quantum processing units in the set of quantum processing units are not connected (208) to the control unit 202 via the switch 203. The switch 203 may be controlled by the control unit 202 that also controls the set of quantum processing units 200. Alternatively, the switch 203 may be controlled by a separate control unit.

The control unit may comprise at least one processor. The processor may comprise, for example, one or more processing devices such as a co-processor, a microprocessor, a digital signal processor (DSP), or various other processing devices including integrated circuits such as, an application specific integrated circuit (ASIC), a field programmable gate array (FPGA), a microprocessor unit (MCU), a hardware accelerator or a special-purpose computer chip. The control unit may further comprise a memory. The memory may be configured to store, for example, computer programs. The memory may comprise one or more volatile memory devices, one or more non-volatile memory devices, and/or a combination of volatile memory devices and non-volatile memory devices. For example, the memory may be embodied as magnetic storage devices (such as hard disk drives, magnetic tapes, etc.), optical magnetic storage devices, and semiconductor memories (such as mask ROM, PROM (programmable ROM), EPROM (erasable PROM), flash ROM, RAM (random access memory), etc.). The control unit 202 may be configured to, via the switch 203, select quantum processing units 201 from the set of quantum processing units 200 in an ordered sequence, and select quantum circuits from the one or more quantum circuits in an ordered sequence, and to cause a selected quantum processing unit to execute a selected quantum circuit. In other words, the quantum processing units are configured to operate in a serial manner and the switch allows time multiplexing of the control electronics in such a way that during the reset phase of one QPU, execution is done on other QPUs. For example, the control unit 202 may be configured to perform the steps: (1) select a first quantum processing unit from the set of quantum processing units 200 and cause the first quantum processing unit to execute a first quantum circuit, (2) after the execution of the first quantum circuit in the first quantum processing unit has finished, select a second quantum processing unit from the set of quantum processing units 200 and cause the second quantum processing unit to execute a second quantum circuit. As another example, the control unit 202 may be configured to perform the steps: (1) select a first and a second quantum processing unit from the set of quantum processing units 200, and a first and a second quantum circuit, (2) execute the second quantum circuit in the second quantum processing unit after the execution of the first quantum circuit in the first quantum processing unit has finished.

In an implementation form, the one or more quantum circuits may comprise more than one quantum circuit, and the sequence of quantum circuits may comprise more than one quantum circuit, so that the selected quantum circuit is different for at least two quantum processing units in the set of quantum processing units.

In another implementation form, the one or more quantum circuits may comprise one quantum circuit, so that the sequence of quantum circuits comprises one quantum circuit and the selected quantum circuit is the same for each quantum computing unit.

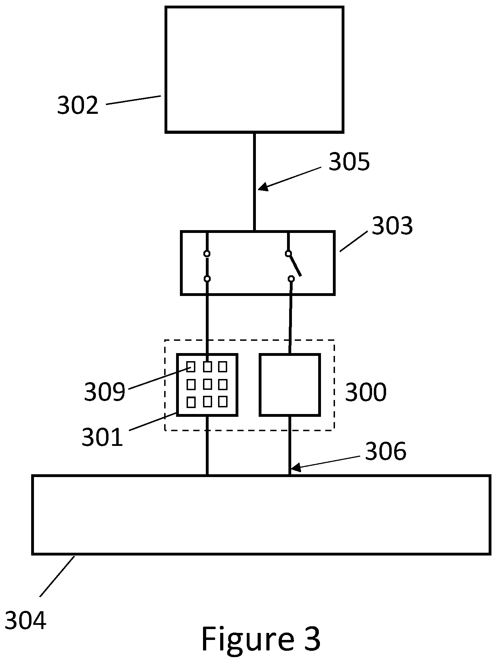

Each quantum processing unit in the set of quantum processing units may be a core in a multi-core QPU or a sub-unit of a QPU. Figure 3 illustrates another simplified example of an arrangement for quantum computing comprising a switch 303. The arrangement further comprises a set of quantum processing units 300 and a control unit 302 configured to execute one or more quantum circuits in the set of quantum processing units 300. The switch 303 is connected between the set of quantum processing units 300 and the control unit 302. In this example, one quantum processing unit 301 in the set of quantum processing units 300 comprises a plurality of sub-units 309. In such arrangement, the control unit 302 may be configured to, via the switch 303, execute in an ordered sequence a selected quantum circuit in the quantum processing unit 301 and the sub-unit of the quantum processing unit 309. Reference numbers 304, 305 and 306 in figure 3 correspond to reference numbers 204, 205 and 206, respectively, in figure 2.

In an implementation form, the arrangement may further comprise a cryostat, wherein the plurality of quantum computing units and the switch are located inside the cryostat.

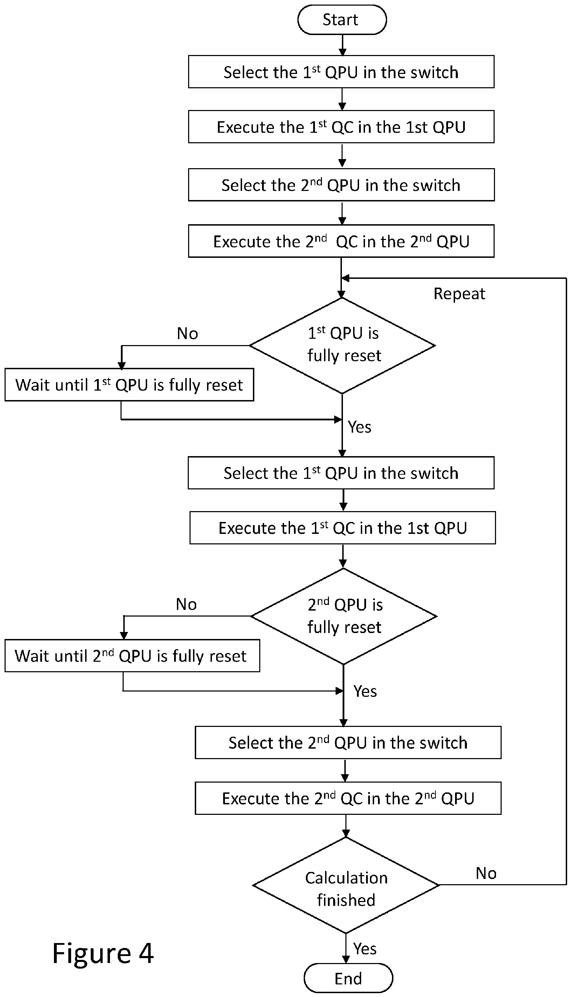

Figure 4 presents a flow chart illustration of an example method for increasing circuit execution throughput in an arrangement for quantum computing. The arrangement comprises a set of quantum processing units and the set of quantum processing units comprises at least a first quantum processing unit and a second quantum processing unit. Each of the first quantum processing unit and the second quantum processing unit comprises a plurality of qubits arranged to perform a quantum computation. The arrangement further comprises a control unit configured to execute one or more quantum circuits in the set of quantum processing units. The one or more quantum circuits comprise at least a first quantum circuit and a second quantum circuit. The arrangement further comprises a switch. The switch is connected between the set of quantum processing units and the control unit, and the switch is configured to connect a selected quantum processing unit in the set of quantum processing units while the other quantum processing units in the set of quantum processing units are not connected to the control unit via the switch.

The method comprises the consecutive steps of: (1) selecting the first quantum processing unit in the switch and executing the first quantum circuit in the first quantum processing unit, and (2) selecting the second quantum computing unit in the switch and executing the second quantum circuit in the second quantum computing unit. The method further comprises repeating step (1) when the first quantum computing unit is fully reset and step (2) when the second quantum computing unit is fully reset.

In other words, the quantum processing units are configured to operate in a serial manner. The job may comprise several different quantum circuits (QC), each quantum circuit requiring many shots. The control unit may select, via the switch, a set of available quantum processing units which are compatible with the quantum circuits. Each quantum processing unit in the set of quantum processing units may be a core in a multi-core QPU or a sub-unit of a QPU. For example, the control units may select a first quantum processing unit and a second quantum processing unit. The first quantum processing unit and the second quantum processing unit in the set of quantum processing units may comprise the same number of qubits. Alternatively, the first quantum processing unit and the second quantum processing unit in the set of quantum processing units may comprise a different number of qubits.

In this example, a first quantum circuit is compiled and transpiled to the first quantum processing unit and, a second quantum circuit is compiled and transpiled to the second quantum processing unit. The first quantum circuit and the second quantum circuit may be identical. Alternatively, the first quantum circuit and the second quantum circuit may be different. The control unit selects the first quantum processing unit, via the switch, and executes the first quantum circuit in the first quantum processing unit, then subsequently selects the second quantum processing unit, via the switch, and executes the second quantum circuit in the second quantum processing unit. If the first quantum processing unit is fully reset, the control unit selects the first quantum processing unit again, via the switch, and executes again the first quantum circuit in the first quantum processing unit. If the first quantum processing unit is not fully reset, the control unit waits until the rest is completed then executes the first quantum circuit in the first quantum processing unit. Similarly, If the second quantum processing unit is fully reset, the control unit selects the second quantum processing unit again, via the switch, and executes the second quantum circuit again in the second quantum processing unit. If the second quantum processing unit is not fully reset, the control unit waits until the reset is completed then executes the second quantum circuit in the second quantum processing unit. The steps are repeated until all shots of a given circuit have been executed.

The arrangement may comprise more than two quantum processing units such as three QPUs, four QPUs, five QPUs, etc. In such arrangement, the method may comprise selecting, in the switch, all quantum processing units, and executing in a sequence a selected quantum circuit in each selected quantum processing unit. The method may further comprise repeating the execution of the selected quantum circuit in the selected quantum processing unit once the quantum processing unit is fully reset. In other words, the method may additionally comprise the subsequent steps of selecting the third quantum computing unit in the switch and executing a third quantum circuit in the third quantum computing unit, selecting the fourth quantum computing unit in the switch and executing a fourth quantum circuit in the fourth quantum computing unit, selecting the fifth quantum computing unit in the switch and executing a fifth quantum circuit in the fifth quantum computing unit, etc.

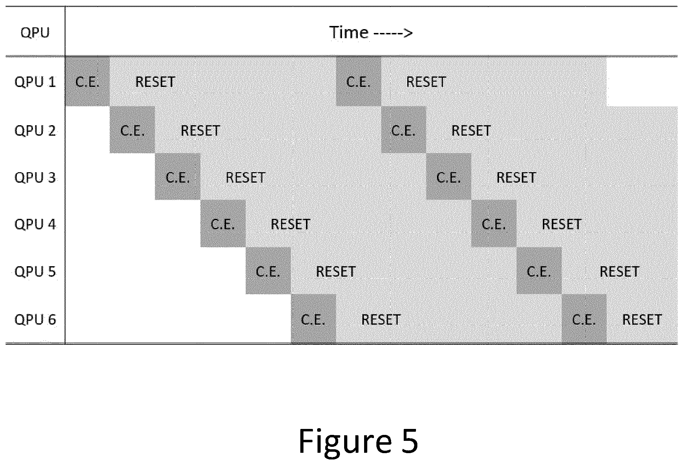

Figure 5 illustrates an example of a quantum circuit execution in an arrangement for quantum computing comprising a switch and a plurality of QPUs. In the figure, C.E. refers to quantum circuit execution. In this example, the arrangement comprises six quantum processing units which are configured to operate, via the switch, in a serial manner: QPU1, QPU2, QPU3, QPU4, QPU5 and QPU6. In other words, after quantum circuit execution in a specific quantum processing unit, the quantum processing unit enters a reset phase. During that reset phase, the quantum circuit is executed in the next quantum processing unit. For example, the quantum circuit is first executed in QPU1. After quantum circuit execution in QPU1, QPU1 enters a phase of reset. During the reset phase of QPU1, the quantum circuit is executed in QPU2. After quantum circuit execution in QPU2, QPU 2 enters a phase of reset. During the reset phase of QPU1 and QPU2, the quantum circuit is executed in QPU3. Subsequently, and in a similar sequential way, the quantum circuit is executed in QPU4, QPU5 and QPU6. Such operation method, allows a constant quantum circuit execution, improving thereby the circuit execution throughput in the arrangement for quantum computing.

## Claims

1. an arrangement for quantum computing comprising:
- a set of quantum processing units comprising two or more quantum processing units, wherein each quantum processing unit in the set of quantum processing units comprises a plurality of qubits arranged to perform a quantum computation,
- a control unit configured to execute one or more quantum circuits in the set of quantum processing units,
**characterized in that**
the arrangement further comprises a switch, wherein the switch is connected between the set of quantum processing units and the control unit, and the switch is configured to connect a selected quantum processing unit in the set of quantum processing units to the control unit while the other quantum processing units in the set of quantum processing units are not connected to the control unit via the switch,
and wherein the control unit is configured to, via the switch, cause the selected quantum processing unit in the set of quantum processing units to execute a quantum circuit while the other quantum processing units in the set of quantum processing units are not connected to the control unit via the switch.

2. An arrangement according to claim 1, wherein the control unit is configured to, via the switch, select quantum processing units from the set of quantum processing units in an ordered sequence, and select quantum circuits from the one or more quantum circuits in an ordered sequence, and to cause a selected quantum processing unit to execute a selected quantum circuit.

3. An arrangement for quantum computing according to claim 2, wherein the one or more quantum circuits comprise more than one quantum circuit, and the sequence of quantum circuits comprises more than one quantum circuit, so that the selected quantum circuit is different for at least two quantum processing units in the set of quantum processing units.

4. An arrangement for quantum computing according to claim 2, wherein the one or more quantum circuits comprise one quantum circuit, so that the sequence of quantum circuits comprises one quantum circuit and the selected quantum circuit is the same for each quantum computing unit.

5. An arrangement for quantum computing according to any preceding claim, wherein each quantum processing unit in the set of quantum processing units is a core in a multi-core QPU or a sub-unit of a QPU.

6. An arrangement for quantum computing according to any preceding claim, wherein each quantum processing unit in the set of quantum processing units comprises the same number of qubits.

7. An arrangement for quantum computing according to any preceding claim, wherein at least two quantum processing units in the set of quantum processing units comprise a different number of qubits.

8. A method for increasing circuit execution throughput in an arrangement for quantum computing, wherein the arrangement comprises:
- A set of quantum processing units, wherein the set of quantum processing units comprises at least a first quantum processing unit and a second quantum processing unit, and wherein each of the first quantum processing unit and the second quantum processing unit comprises a plurality of qubits arranged to perform a quantum computation,
- a control unit configured to execute one or more quantum circuits in the set of quantum processing units, wherein the one or more quantum circuits comprise at least a first quantum circuit and a second quantum circuit,
- a switch, wherein the switch is connected between the set of quantum processing units and the control unit, and the switch is configured to connect a selected quantum processing unit in the set of quantum processing units while the other quantum processing units in the set of quantum processing units are not connected to the control unit via the switch,
**characterized in that** the method comprises the consecutive steps of:
(1)Selecting the first quantum processing unit in the switch, and executing the first quantum circuit in the first quantum processing unit,
(2)Selecting the second quantum computing unit in the switch and executing the second quantum circuit in the second quantum computing unit,
The method further comprises repeating step (1) when the first quantum computing unit is fully reset and step (2) when the second quantum computing unit is fully reset.

9. A method for increasing circuit execution throughput in an arrangement for quantum computing according to claim 8, wherein the first quantum circuit and the second quantum circuit are identical.

10. A method for increasing circuit execution throughput in an arrangement for quantum computing according to claim 8, wherein the first quantum circuit and the second quantum circuit are different.

11. A method for increasing circuit execution throughput in an arrangement for quantum computing according to any of claims 8-10, wherein each quantum processing unit in the set of quantum processing units is a core in a multi-core QPU or a sub-unit of a QPU.

12. A method for increasing circuit execution throughput in an arrangement for quantum computing according to any of claims 8-11, wherein the first quantum processing unit and the second quantum processing unit in the set of quantum processing units comprise the same number of qubits.

13. A method for increasing circuit execution throughput in an arrangement for quantum computing according to any of claims 8-11, wherein the first quantum processing unit and the second quantum processing unit in the set of quantum processing units comprise a different number of qubits.

14. A quantum computing system comprising one or more arrangements according to any of claims 1-7.
